# EUROPÄISCHE PATENTSCHRIFT

(11) **EP 0 761 488 B1**
(45) Veröffentlichungstag und Bekanntmachung des Hinweises auf die Patenterteilung: **02.11.2000**
(21) Anmeldenummer: 96110113.6
(22) Anmeldetag: 22.06.1996
(51) Int. Cl.: B60K 26/02, G05G 1/14

(54) **Fahrpedaleinheit für Fahrzeuge**
Accelerator pedal unit for vehicles
Ensemble de pédale d'accélérateur pour véhicules

(30) Priorität: 29.08.1995 DE 19531735
(43) Veröffentlichungstag der Anmeldung: 12.03.1997
(73) Patentinhaber: DaimlerChrysler AG, 70567 Stuttgart (DE)
(72) Erfinder: Papenhagen, Dieter, 71334 Waiblingen (DE); Löchle, Manfred, 70329 Stuttgart (DE); Meyer, Thorsten, 70736 Fellbach (DE)

(56) Entgegenhaltungen:
- EP-A- 0 141 947
- EP-A- 0 430 600
- WO-A-94/29584
- DE-A- 2 815 769
- DE-U- 9 409 892
- PATENT ABSTRACTS OF JAPAN vol. 018, no. 479 (M-1669), 7.September 1994 & JP 06 156110 A (TOYOTA AUTOM LOOM WORKS LTD), 3.Juni 1994,

## Beschreibung

Die Erfindung betrifft eine Fahrpedaleinheit für Fahrzeuge nach der im Oberbegriff von Anspruch 1 näher definierten Art.

Aus der WO 94/29584 A1 ist eine gattungsgemäße Fahrpedaleinheit für Fahrzeuge bekannt, bei welcher benachbart zu dem Lagerauge des Pedalhebels zur Bildung einer Lagerstelle eine Lagerhülse eingesetzt ist, wobei die Lagerhülse zwischen zwei mit Lagerbohrungen versehenen Schenkeln eines Halters angeordnet ist.

Aus der EP 0 430 600 B1 ist eine Fahrpedaleinheit für Fahrzeuge mit einem Pedal und einem damit verbundenen Pedalhebel bekannt. Zur Rückstellung in den Leerlauf wirkt auf den Pedalhebel eine spiralförmige Rückstellfeder ein.

Fahrpedaleinheiten sind weiterhin auch aus der DE-OS 28 15 769 und der DE-OS 27 28 787 bekannt. Dabei ist der Pedalhebel an einer Halterung in einer Fahrzeugwand befestigt.

Die vorbekannten Fahrpedaleinheiten sind jedoch relativ kompliziert aufgebaut und ihre Montage erfordert einen entsprechenden Aufwand. Insbesondere gilt dies für die Anordnung der Rückstellfeder und deren Verbindung mit den Fahrpedalteilen.

Der vorliegenden Erfindung liegt daher die Aufgabe zugrunde, die eingangs erwähnten Nachteile des Standes der Technik zu vermeiden, insbesondere eine Fahrpedaleinheit zu schaffen, die für eine rationelle Serienfertigung, insbesondere auch für eine Vormontage, geeignet ist, wobei auch die Rückzugsfeder vormontierbar sein soll.

Außerdem soll die Fahrpedaleinheit auch für eine elektronische bzw. elektrische Weiterleitung der Impulse an den Verbrennungsmotor statt einer Seilzugverbindung geeignet sein.

Erfindungsgemäß wird diese Aufgabe durch die im kennzeichnenden Teil von Anspruch 1 genannten Merkmale gelöst.

Die erfindungsgemäße Fahrpedaleinheit läßt sich weitgehend vormontieren, wobei durch den gleichzeitigen Einbau der Rückzugsfeder und des damit verbundenen Seil- oder Drahtzuges bei der Vormontage auch bereits die erforderliche Rückstellung des Fahrpedales vorgesehen sein kann. Der Seil- oder Drahtzug wirkt dabei im Sinne einer Reibbremse und kann damit dem Fahrer ein entsprechendes Fahrgefühl vermitteln, was insbesondere bei einer Weiterleitung der Stellung des Fahrpedales zu dem Fahrzeugmotor statt über eine Seilzugverbindung durch elektronische bzw. elektrische Impulse von Vorteil ist.

Wenn gemäß einer sehr vorteilhaften Ausgestaltung nach Anspruch 2 der Seil- oder Drahtzug als Schlinge oder Schlaufe über einen Teilumfangsschlitz in die innere Umfangswand bzw. die Lagerbohrung des Lagerauges eingeführt wird, so wird eine schnelle und positionssichere vormontage der Rückzugsfeder erreicht.

Vorteilhafte Weiterbildungen und Ausgestaltungen der Erfindung ergeben sich aus den übrigen Unteransprüchen und dem prinzipmäßig nachfolgend anhand der Zeichnung beschriebenem Ausführungsbeispiel.

Es zeigt:
- Fig. 1: die erfindungsgemäße Fahrpedaleinheit in einer Explosionsdarstellung;
- Fig. 2: eine Seitenansicht der Fahrpedaleinheit nach der Fig. 1 teilweise im Schnitt;

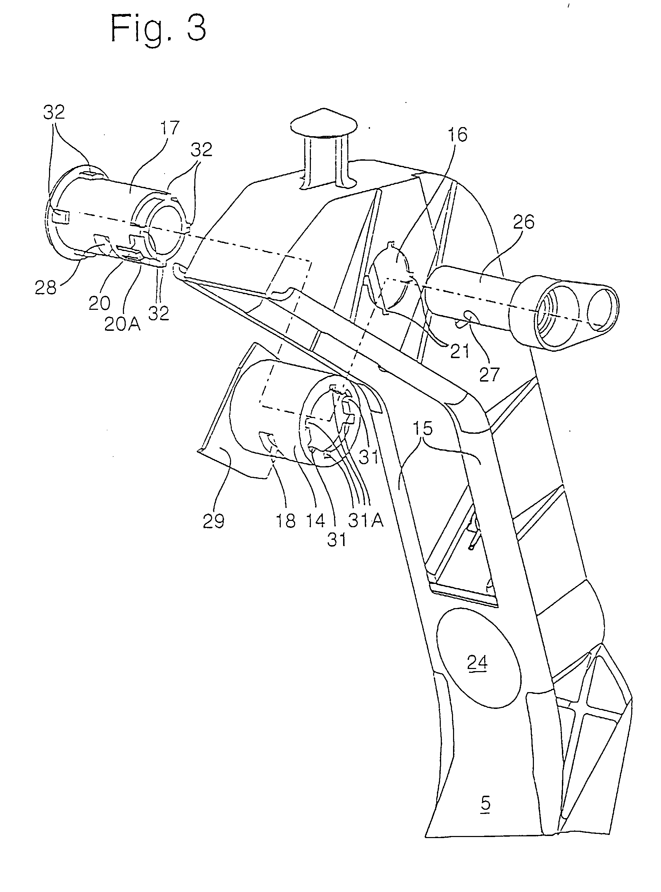

- Fig. 3: eine vergrößerte Darstellung der Lagerstelle des Pedalhebels mit den dazugehörigen Teilen;
- Fig. 4: eine perspektivische Darstellung des Pedalhebels mit zwei eingelegten Rückzugsfedern; und
- Fig. 5: eine perspektivische Darstellung des Halters mit den vormontierten Rückzugsfedern (ohne Pedalhebel) und teilweise aufgeschnitten.

Die Fahrpedaleinheit weist ein Pedal 1 auf, das in bekannter Weise über eine Steckverbindung 2 mit einem Pedalhebel 3 verbunden ist. Der Pedalhebel 3 ist über ein Lagerauge 4 auf der von der Steckverbindung abgewandten Seite schwenkbar mit einem Halter 5 verbunden, der ein separates Teil darstellt. Nach einem kompletten Zusammenbau der Fahrpedaleinheit wird der Halter 5 und damit die ganze vormontierte Einheit auf beliebige Weise mit einer Fahrzeugwand verbunden. Im Bedarfsfalle kann das Pedal 1 auch noch auf der von der Lagerstelle abgewandten Seite über ein gelenkiges Verbindungsteil 6 mit dem Halter 5 verbunden sein.

Das Lagerauge 4 ist über einen Teilbereich seiner äußeren Umfangswand mit zwei parallel nebeneinander angeordneten Teilumfangsschlitzen 8 versehen. Zur Montage von zwei Seilzügen 10 werden diese im Bereich ihrer Enden zu einer Schlaufe bzw. Schlinge 9 geformt. Die beiden Schlaufen 9 werden über die Teilumfangsschlitze 8 von außen her in das Innere des Lagerauges 4, d.h. in dessen Bohrung, eingeführt. Die innere Umfangswand bzw. die Lagerbohrung des Lagerauges 4 ist mit zwei Umfangsnuten 12 versehen, die mit den Teilumfangsschlitzen 8 fluchten. In diese beiden Umfangsnuten 12 werden die beiden Schlaufen 9 der Seilzüge 10 eingelegt. Die Enden der Seilzüge 10 sind mit Nippeln 7 versehen, die in entsprechend angepaßte Aussparungen 11 in der äußeren Umfangswand des Lagerauges 4 eingelegt bzw. eingespannt werden.

Die beiden wieder aus den Teilumfangsschlitzen 8 herausgeführten Teile der beiden Seilzüge 10 werden in Rillen über einen rückwärtigen Teil des Lagerauges 4 geführt, der in Form eines Nockens 13 ausgebildet ist. Nach einer Führung der beiden Seilzüge 10 über den Nocken 13 werden diese jeweils mit Rückzugsfedern 22 verbunden bzw. sind einstückig mit diesen. Die Rückzugsfedern 22 sind an ihren anderen Enden mit Haken 23 versehen, mit denen sie auf eine nachstehend näher beschriebene Weise mit dem Halter 5 verbunden werden bzw. mit denen die Rückzugsfedern 22 in den Halter 5 eingespannt werden.

Der Nocken 13 weist in seinem Verlauf unterschiedliche Radien auf, wodurch sich in Abhängigkeit von der Stellung des Pedalhebels 3 unterschiedliche Hebelarme für die Seilzüge 10 mit einem Drehachsenmittelpunkt von Pedalhebel 3 und Halter 5 ergeben. Auf diese Weise läßt sich ein fahrgeschwindigkeits- bzw. fahrpedalabhängiges Gefühl für einen Fahrer erreichen.

Nach dem Einlegen der Schlingen bzw. Schlaufen 9 der Seilzüge 10 in die innere Umfangsnut 12 wird in das Lagerauge 4 eine feststehende Lagerhülse 14 eingeschoben. Die Lagerhülse 14 wirkt als eine Art Reibbuchse zwischen den Schlaufen 9 und der inneren Umfangswand bzw. der Lagerbohrung in dem Lagerauge 4 des Pedalhebels 3.

Die Lagerhülse 14 besitzt eine axiale Länge, die etwas größer ist als die Breite des Lagerauges 4. Auf diese Weise wird sie unter einer entsprechenden Klemmwirkung und damit spielfrei zwischen zwei Schenkeln 15 des wenigstens über einen Teilbereich im Querschnitt eine U-Form aufweisenden Halters 5 geklemmt.

Durch eine Lagerbohrung 16 in einem der beiden Schenkel 15 des Halters 5 und durch die Lagerhülse 14 wird anschließend eine Gleitbuchse 17 geschoben.

Für eine genaue Positionierung eines Fensters 18 in der Lagerhülse 14, durch das ein Mitnahmestift 19 gesteckt ist, ist die Lagerhülse 14 auf einer Stirnseite mit einer rahmenartigen Erweiterung 29 versehen, damit bei der Montage der Lagerhülse 14 nebst Pedalhebel 3 das Fenster 18 die für die Montage des Mitnahmestiftes 19 geeignete Position erhält.

Damit die gewünschte Position beibehalten und eine geforderte Zuordnung eingehalten wird, ist die Gleitbuchse 17 auf ihrem Umfang mit aus dieser herausragenden Lappen 20 und Nasen 32 versehen, wobei die Lappen 20 an ihren vorderen Enden zusätzlich noch mit Rastnasen 20A versehen sind.

An die Größen der Nasen 32 angepaßte Aussparungen 21 und 31A befinden sich in den Lagerbohrungen 16 und in der inneren Umfangswand der Lagerhülse 14. Wird für eine Verbindung des Pedalhebels 3 mit dem Halter 5 bei der Montage die Gleitbuchse 17 eingeschoben, so kann dies nur in einer bestimmten Position erfolgen, wobei die Lappen 20 in die entsprechenden, asymmetrisch angeordneten Nuten 31 der Lagerhülse 14 in Form von Rastverschlüssen einrasten. Im montierten Zustand kommen die Nasen 32 in den Aussparungen 31A der Lagerhülse 14 und in den Aussparungen 21 der Lagerbohrung 16 zum Ruhen. Auf diese Weise sind sowohl die Lagerhülse 14 als auch die Gleitbuchse 17 drehfest mit dem Halter 5 verbunden.

In eine Bohrung 24 des Halters 5 kann bei einem Automatik-Fahrzeug ein Kick-Down-Schalter 25 eingesetzt werden.

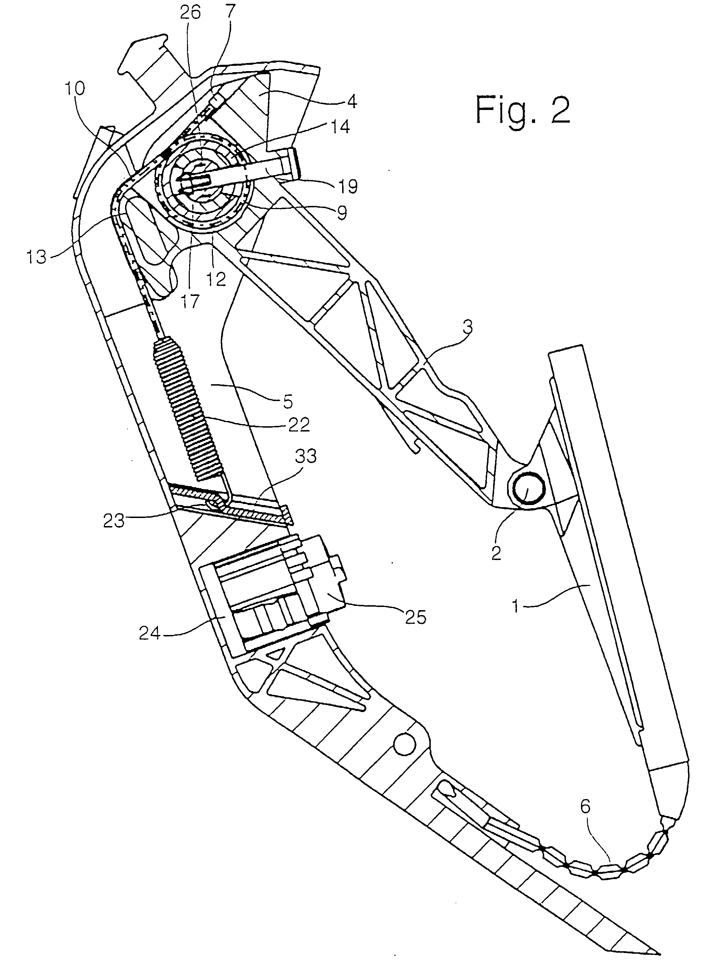

Wie aus der Fig. 2 ersichtlich ist, ist die Fahrpedaleinheit nach dem Ausführungsbeispiel für eine elektronische bzw. elektrische Verbindung mit dem Fahrzeugmotor vorgesehen. Zu diesem Zweck wird in die Gleitbuchse 17 auf der von der Einschubseite der Gleitbuchse 17 abgewandten Seite aus eine Geberwelle 26 eingeschoben. Die Geberwelle 26 kann als Potentiometerantriebswelle oder auch als Hallgeberantriebswelle in bekannter Weise ausgebildet sein, womit die jeweilige Stellung der Geberwelle 26 und damit auch des Pedales 1 elektrisch bzw. elektronisch an den Fahrzeugmotor zu dessen Steuerung weitergemeldet wird. Hierzu dient der in dem Pedalhebel 3 in einer Bohrung befestigte Mitnahmestift 19, der z.B. als Raststift oder als Gewindestift ausgebildet sein kann, welcher entsprechend in die Geberwelle 26 einrastet oder in eine entsprechende Gewindebohrung 27 in die Umfangswand der Geberwelle 26 eingeschraubt ist. Zur Durchführung des Mitnahmestiftes 19 und damit zur drehfesten Verbindung mit dem Pedalhebel 3 muß selbstverständlich auch die Gleitbuchse 17 mit einem Fenster 28 versehen sein, das mit dem Fenster 18 in der Lagerhülse 14 fluchtet. Die Größe der beiden Fenster 18 und 28 ist dabei so zu wählen, daß sich der Mitnahmestift 19 und damit der Pedalhebel 3 frei zwischen einem oberen Anschlag, der den Leerlaufanschlag darstellt, und einem unteren Anschlag, der den Vollastanschlag darstellt, bewegen kann.

Die Gleitbuchse 17 hat eine Doppelfunktion, nämlich für die Lagerhülse 14 dient sie als drehsichere Montage- und Verschlußbuchse, wozu sie auf einfache Weise durch Rastverschlüsse bzw. klipsartig mit der Lagerhülse 14 verbunden wird, und für die Geberwelle 26 dient sie als Gleitbuchse.

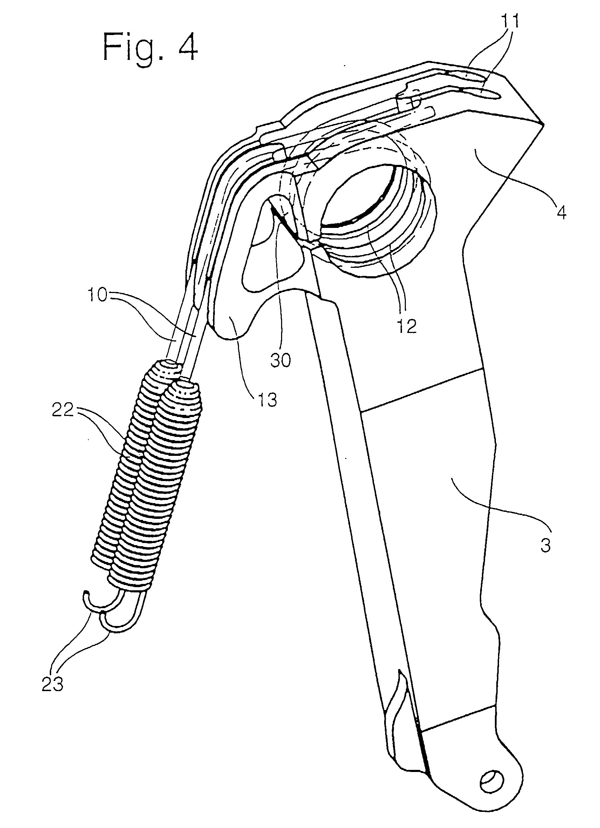

Ein in axialer Richtung verlaufender Dehnschlitz 30 in dem Lagerauge 4 (siehe Fig. 4) dient als Toleranzausgleich, um eng gefaßte Lagerstellen bilden zu können.

Die beiden Haken 23 der Rückzugsfedern 22 sind unter Vorspannung in eine Öse bzw. Bohrung einer Querwand 33 des Halters 5 eingehängt.

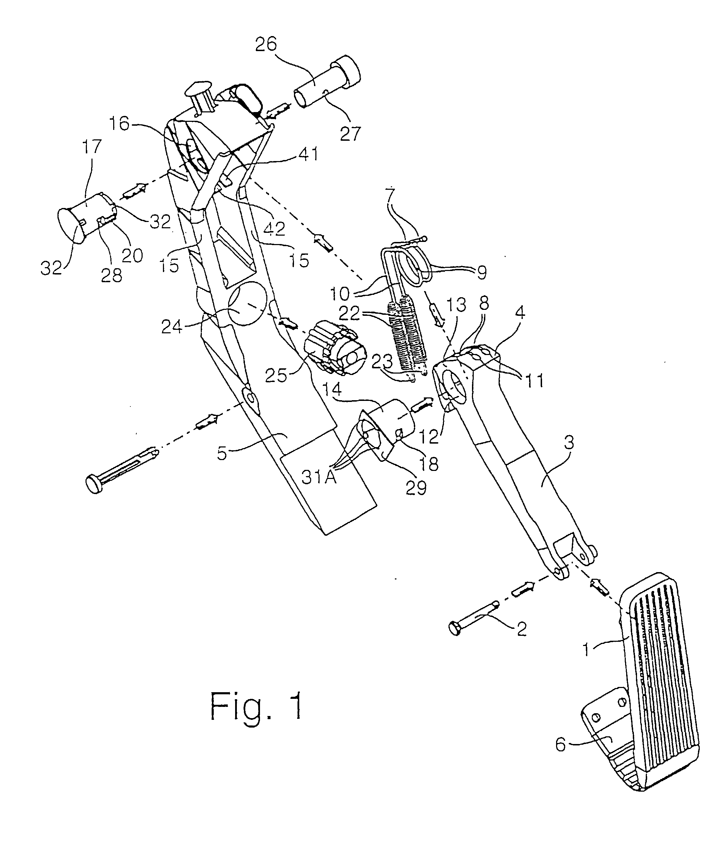

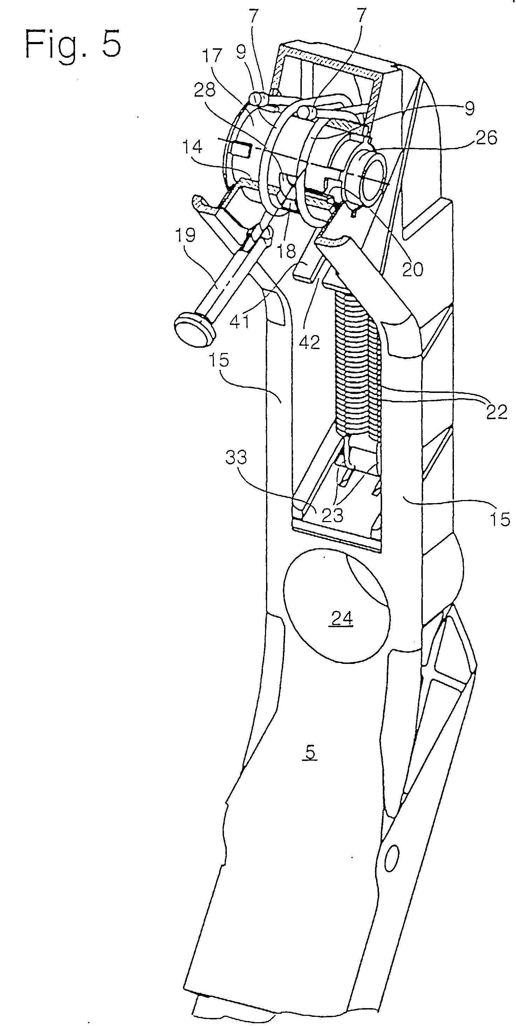

Zwischen den beiden Schenkeln 15 des Halters 5 ist zwischen den Rückzugsfedern 22 und der Lagerstelle bzw. der Drehachse des Pedalhebels 3 eine Schlitzwand 41 (nur in Fig. 1 und 5 eingezeichnet) angeordnet. Die Schlitzwand 41 besitzt zwei auf Abstand voneinander angeordnete Schlitze 42, die lediglich so breit sind, daß der Seilzug 10 durchgeführt werden kann. Dies bedeutet, die beiden Rückzugsfedern 22 befinden sich damit zwischen der Querwand 33 und der Schlitzwand 41. Sollte eine Rückzugsfeder 22 reissen, so wird durch die Schlitzwand 41 die Funktionsweise der Fahrpedaleinheit nicht blockiert, denn die gerissene Rückzugsfeder 22 kann nicht in den Bewegungs- bzw. Schwenkbereich des Pedalhebels 3 gelangen.

Mit 36 und 37 sind Montagehaken am Pedal 3 und am Halter 5 bezeichnet, deren Funktion hier nicht näher beschrieben wird.

Die beschriebene Erfindung ist nicht auf das vorliegende Ausführungsbeispiel beschränkt. So kann der Halter 5 beispielsweise auch mit einem hängenden Fahrpedal, also einem Fahrpedal ohne untere Verbindung zum Fahrzeugboden bzw. zum Halter 5, verbunden sein.

## Patentansprüche

1. Fahrpedaleinheit für Fahrzeuge mit einem an einem Pedalhebel (3) befestigten Pedal (1), wobei der Pedalhebel (3) auf der von dem Pedal (1) abgewandten Seite über ein Lagerauge (4) drehbar in Lagerbohrungen (16) gelagert ist, wobei wenigstens eine auf den Pedalhebel (3) einwirkende Rückzugsfeder (22) vorgesehen ist und in das Lagerauge (4) des Pedalhebels (3) zur Bildung einer Lagerstelle eine Lagerhülse (14) eingesetzt ist, und wobei die Lagerhülse (14) zwischen zwei mit den Lagerbohrungen (16) versehene Schenkel (15) eines Halters (5) eingesetzt ist,
**dadurch gekennzeichnet,** daß
a) zwischen der inneren Umfangswand des Lagerauges (4) und der Lagerhülse (14) wenigstens über einen Teilumfangsbereich wenigstens ein Seil- oder Drahtzug (10) verläuft,
b) der Seil- oder Drahtzug (10) wenigstens teilweise in einer Umfangsnut (12) der inneren Umfangswand des Lagerauges (4) liegt, und
c) der Seil- oder Drahtzug (10) mit der Rückzugsfeder (22) verbunden ist, deren Ende unter Vorspannung an dem Halter (5) befestigt ist.

2. Fahrpedaleinheit nach Anspruch 1,
**dadurch gekennzeichnet**, daß das von der Rückzugsfeder (22) abgewandte Ende des Seil- oder Drahtzuges (10) im äußeren Bereich des Lagerauges (4) oder des Pedalhebels (3) befestigt ist, und daß der Seil- oder Drahtzug (10) von dem äußeren Bereich aus über einen Teilumfangsschlitz (8) in Form einer Schlaufe (9) in das Innere des Lagerauges (4) geführt ist, von wo aus der Seil- oder Drahtzug (10) nach der wenigstens teilweisen Umschlingung der Lagerhülse (14) aus dem gleichen oder einem anderen Teilumfangsschlitz (8) wieder herausgeführt und über das Lagerauge (4) des Pedalhebels (3) zur Rückzugsfeder (22) geführt ist.

3. Fahrpedaleinheit nach Anspruch 2,
**dadurch gekennzeichnet,** daß der Seil- oder Drahtzug (10) über einen Bereich des Lagerauges (4) geführt ist, der als Nocken (13) ausgebildet ist, wobei der Nocken (13) eine derartige Form aufweist, daß sich bei der Überführung des Seil- oder Drahtzuges (10) über den Nokken (13) unterschiedliche Hebelarme für den Seil- oder Drahtzug (10) einstellen.

4. Fahrpedaleinheit nach Anspruch 1, 2 oder 3,
**dadurch gekennzeichnet**, daß die freien Enden des Seil- oder Drahtzuges (10) mit Nippeln (7) versehen sind, die in Aussparungen (11) am Außenumfang des Lagerauges (4) eingespannt sind.

5. Fahrpedaleinheit nach einem der Ansprüche 1 bis 4,
**dadurch gekennzeichnet,** daß die Lagerhülse (14) und die Gleitbuchse (17) am Umfang mit Fenstern (18,28) versehen sind, die miteinander fluchten, daß in der Gleitbuchse (17) eine Geberwelle (26) mit elektrischen Signalen erzeugenden Gliedern für die Elektronik des Fahrzeuges eingesetzt ist, und daß die Geberwelle (26) über einen durch die Fenster (18,28) ragenden Mitnahmestift (19) mit dem Pedalhebel (3) verbunden ist.

6. Fahrpedal nach Anspruch 5,
**dadurch gekennzeichnet,** daß die Lagerhülse (14) zur umfangsgenauen Positionierung der Fenster (18,28) mit einer radialen Erweiterung (29) versehen ist, und daß die Gleitbuchse (17) zur umfangsgenauen Positionierung über Rastverschlüsse (20,31) mit der Lagerhülse (14) verbunden ist.

7. Fahrpedaleinheit nach einem der Ansprüche 1 bis 6,
**dadurch gekennzeichnet,** daß zwischen den beiden Schenkeln (15) des Halters (5) auf der von der Einhängeseite der Rückzugsfeder (22) abgewandten Seite vor der Rückzugsfeder (22) eine sich zwischen die beiden Schenkel (15) erstreckende Schlitzwand (41) angeordnet ist, die wenigstens einen Schlitz (42) zur Durchführung des Seil- oder Drahtzuges (10) aufweist.

## Claims

1. Accelerator pedal unit for vehicles, with a pedal (1) attached to a pedal lever (3), the pedal lever (3) being mounted in bearing bores (16) of a bearing block (4) at its end away from the pedal (1), such that at least one restoring spring (22) is provided which acts upon the pedal lever (3) and a bearing sleeve (14) is inserted into the bearing block (4) of the pedal lever (3) to form a bearing, the bearing sleeve (14) being held between two shanks (15) of a holder (5) in which the bearing bores (16) are formed,
**characterised in that**
a) between the inside circumferential wall of the bearing block (4) and the bearing sleeve (14), at least one cable or wire (10) passes over a part-circumferential area,
b) the cable or wire (10) lies at least in part within a circumferential groove (12) in the inside circumferential wall of the bearing block (4), and
c) the cable or wire (10) is connected to the restoring spring (22), whose end is attached to the holder (5) under some pre-tension.

2. Accelerator pedal unit according to Claim 1,
**characterised in that**
the end of the cable or wire (10) away from the restoring spring (22) is attached to the outside area of the bearing block (4) or the pedal lever (3), and the cable or wire (10) is passed from the said outside area, in the form of a loop (9), through a part-circumferential slot (8) and into the inside of the bearing block (4), from where the cable or wire (10), after passing part of the way round the bearing sleeve (14), emerges again out of the same or another part-circumferential slot (8) and passes over the bearing block (4) of the pedal lever (3) to the restoring spring (22).

3. Accelerator pedal unit according to Claim 2,
**characterised in that**
the cable or wire (10) passes over an area of the bearing block (4) which is shaped as a cam (13), and the cam (13) has a shape such that when the cable or wire (10) passes over the cam (13), various lever-arm lengths are produced for the cable or wire (10).

4. Accelerator pedal unit according to Claims 1, 2 or 3,
**characterised in that**
the free ends of the cable or wire (10) are provided with nipples (7), which are inserted in notches (11) in the outer circumference of the bearing block (4).

5. Accelerator pedal unit according to any of Claims 1 to 4,
**characterised in that**
the bearing block (4) and the sliding sleeve (17) are provided at their circumference with windows (18, 28) aligned with one another, an emitter shaft (26) with elements that produce electrical signals for the electronic system of the vehicle is inserted into the sliding bush (17), and the emitter shaft (26) is connected to a drive pin (19) which extends through the windows (18, 28).

6. Accelerator pedal unit according to Claim 5,
**characterised in that**
to ensure circumferentially accurate positioning of the windows (18, 28), the bearing sleeve (14) is provided with a radially wider portion (29), and to ensure circumferentially accurate positioning the sliding bush (17) is connected to the bearing sleeve (14) by means of detents (20, 31).

7. Accelerator pedal unit according to any of Claims 1 to 6,
**characterised in that**
between the two shanks (15) of the holder (5), at the end away from the end to which the restoring spring (22) is fitted and ahead of the restoring spring (22), a slotted wall (41) extending between the two shanks (15) is arranged, which has at least one slot (42) through which the cable or wire (10) is passed.

## Revendications

1. Ensemble de pédale d'accélérateur pour véhicules, avec une pédale (1) fixée à un levier de pédale (3), le levier de pédale (3) étant monté, sur le côté opposé à la pédale (1), de façon à pouvoir tourner dans des perçages de tourillonnement (16), par l'intermédiaire d'un oeillet de tourillonnement (4), au moins un ressort de rappel (22), agissant sur le levier de pédale (3), étant prévu et une douille de tourillonnement (14) étant insérée dans l'oeillet de tourillonnement (4) du levier de pédale (3), pour former un point de tourillonnement, et la douille de tourillonnement (14) étant insérée entre deux branches (15), munies des perçages de tourillonnement (16), d'un support (5),
caractérisé en ce que
a) au moins un câble ou un fil de transmission (10) s'étend sur au moins une zone périphérique partielle, entre la paroi périphérique intérieure de l'oeillet de tourillonnement (4) et la douille de tourillonnement (14),
b) le câble ou le fil de transmission (10) est situé au moins partiellement dans une gorge périphérique (12) de la paroi périphérique intérieure de l'oeillet de tourillonnement (4), et
c) le câble ou le fil de transmission (10) est relié au ressort de rappel (22), dont l'extrémité est fixée sous précontrainte au support (5).

2. Ensemble de pédale d'accélérateur selon la revendication 1, caractérisé en ce que l'extrémité, opposée au ressort de rappel (22), du câble ou fil de transmission (10), est fixée dans la zone extérieure de l'oeillet de tourillonnement (4) ou du levier de pédale (3), en ce que le câble ou le fil de transmission (10) est guidé, par la zone extérieure, sur une fente périphérique partielle (8), sous la forme d'une boucle (9), pénètre à l'intérieur de l'oeillet de tourillonnement (4), d'où le câble ou le fil de transmission (10), après le au moins un enlacement partiel de la douille de tourillonnement (14), est de nouveau sorti de la même fente périphérique partielle (8) ou d'une autre et est guidé, par l'oeillet de tourillonnement (4) du levier de pédale (3), vers le ressort de rappel (22).

3. Ensemble de pédale d'accélérateur selon la revendication 2, caractérisé en ce que le câble ou fil de transmission (10) est guidé sur une zone de l'oeillet de tourillonnement qui est réalisée sous la forme d'une came (13), la came (13) ayant une forme telle que, lors du passage au-dessus d'elle du câble ou du fil de transmission (10), des bras de levier différents s'établissent sur la came (13) pour le câble ou le fil de transmission (10).

4. Ensemble de pédale d'accélérateur selon la revendication 1, 2 ou 3, caractérisé en ce que les extrémités libres du câble ou fil de transmission (10) sont dotées de raccords (7), enserrés dans des évidements (11) ménagés sur la périphérie extérieure de l'oeillet de tourillonnement (4).

5. Ensemble de pédale d'accélérateur selon l'une des revendications 1 à 4, caractérisé en ce que la douille de tourillonnement (14) et la douille de glissement (17) sont munies, sur la périphérie, de fenêtres (18, 28), alignées ensemble, en ce que, dans la douille de glissement (17), est inséré un arbre de transducteur (26) équipé d'organes générant des signaux électriques, pour l'électronique du véhicule, et en ce que l'arbre de transducteur (26) est relié au levier de pédale (3) par l'intermédiaire d'une tige d'entraînement (19) traversant les fenêtres (18, 28).

6. Pédale d'accélérateur selon la revendication 5, caractérisé en ce que la douille de tourillonnement (14) est munie d'un élargissement radial (29), pour effectuer le positionnement précis en périphérie des- fenêtres (18, 28), et en ce que la douille de glissement (17) est reliée à la douille de tourillonnement (14), par l'intermédiaire de fermetures à encliquetage (20, 31), pour obtenir un positionnement périphérique précis.

7. Ensemble de pédale d'accélérateur selon l'une des revendications 1 à 6, caractérisé en ce qu'une paroi à fentes (41), s'étendant entre les deux branches (15), est disposée, sur le côté opposé au côté accrochage des ressorts de rappel (22), entre les deux branches (15) du support (5), devant le ressort de rappel (22), et présente au moins une fente (42) pour le passage du câble ou fil de transmission (10).
